# EUROPEAN PATENT APPLICATION

(11) **EP 2 868 920 A1**
(43) Date of publication of application: **06.05.2015**
(21) Application number: 12891280.5
(22) Date of filing: 27.12.2012
(51) Int. Cl.: F03D 11/00

(54) **WIND TURBINE ROTOR BLADE AND WIND TURBINE GENERATOR WITH SAME**

(71) Applicant: Mitsubishi Heavy Industries, Ltd., Tokyo 108-8215 (JP)
(72) Inventor: TAKEUCHI, Hiroaki, Tokyo 108-8215 (JP)
(74) Representative: Intès, Didier Gérard André
(86) International application number: PCT/JP2012/083833
(87) International publication number: WO 2014/102957

(57) **Abstract**

A wind turbine blade attached to a hub of a wind turbine generator is provided with: a blade body; a first covering layer covering at least a leading edge in a first region including a tip part of the blade body; and a second covering layer covering at least the leading edge in a second region of the blade body, the second region being disposed on a hub side of the first covering layer, and the first covering layer has a higher erosion resistance than the second covering layer.

## Description

### [Technical Field]

The present invention relates to a wind turbine blade and a wind turbine generator having the wind turbine blade.

### BACKGROUND ART

With increased environmental awareness, wind turbine generators are becoming popular. A wind turbine generator normally has a rotor with a plurality of blades attached to a hub. The rotor is installed to a nacelle which is placed on a tower installed onshore or offshore. In this type of wind turbine generator, the rotor rotates upon receiving wind on the blade, rotation of the rotor is transmitted via a drive train part to a generator housed in the nacelle, and then electric power is generated by the generator.

In Patent Literature 1, a blade for a wind turbine generator is disclosed. The blade includes an erosion protection coating on a blade surface to protect the blade from erosion.

### [Citation List]

### [Patent Literature]

[PTL 1]
US 2011/0142678

### SUMMARY

### [Technical Problem]

It is know that erosion of the wind turbine generator largely relies on a collision speed (tip speed of the blade). Thus, as the length of the blade increases in accordance with the increased size of the wind turbine generator, the circumferential of the speed increases. As a result, erosion is likely to occur.

Further, the increased length of the blade leads to a wider erosion area in the longitudinal length of the blade, in which erosion becomes evident within a prescribed period. Thus, a speed of erosion progression (an erosion speed) may differ within the erosion area. Therefore, even by repairing a portion where erosion became evident through blade maintenance, it is likely that erosion becomes evident after a short time in other portions of the blade as well.

For this reason, the frequency of maintenance on the blade tends to become high for a long wind turbine blade.

However, in the long wind turbine blade, the area of erosion in the longitudinal direction of the blade where erosion tends to be evident is wide. By protecting the entire area by providing an expensive coating having excellent anti-erosion properties, a production cost of the blade rises.

In this point, there is no measure proposed in Patent Literature 1 to suppress rise in the production cost of the blade while lowering the frequency of maintenance on the blade.

It is an object of at least one embodiment of the present invention to provide a wind turbine blade and a wind turbine generator having the wind turbine blade, which make it possible to reduce the maintenance frequency and the production cost.

### [Solution to Problem]

According to at least one embodiment of the present invention, a wind turbine blade attached to a hub of a wind turbine generator comprises: a blade body; a first covering layer which covers at least a leading edge in a first region including a tip part of the blade body; and a second covering layer which covers at least the leading edge in a second region of the blade body, the second region being disposed on a hub side of the first covering layer, and the first covering layer has a higher erosion resistance than the second covering layer.

The first covering layer covers at least the leading edge of the first region including the tip part of the blade body which is susceptible to erosion due to high tip speed and the first covering layer has higher anti-erosion level than the second covering layer which covers at lest the leading edge side of the second region of the blade body disposed on the hub side of the first covering layer. As a result, it is possible to reduce the difference in the erosion rate between the first region and the second region, hence reducing the maintenance frequency of the blade.

Further, by selectively providing the first covering layer having relatively high erosion resistance on at least the ledge edge of the first region, it is possible to reduce the usage of the first covering layer which is generally more expensive than the second covering layer, thereby reducing production cost of the blade.

In some embodiments, the first covering layer and the second covering layer are formed by a first coating and a second coating applied on a surface of the blade body, respectively, and the first coating has a higher erosion resistance than the second coating.

In some embodiments, at least one of the first covering layer or the second covering layer includes a coating whose main component is resin.

In some embodiments, the coating includes particles of metal or ceramic embedded in the resin. This improves erosion resistance of the coating.

In some embodiments, the resin is one of polyurethane resin, vinylester resin or fluorine-based resin. The coating whose main component is polyurethane resin, vinylester resin or fluorine-based resin has high erosion resistance. By forming the coating layer to include the coating whose main component is the resin, it is possible to improve the erosion resistance of the leading edge of the blade where the covering layer is formed.

In some embodiments, the metal particles are constituted of one or more metals selected from a group including copper, stainless steel, titanium alloy and nickel alloy.

According to at least one embodiment of the present invention, a wind turbine generator comprises at least one wind turbine blade, and the at least one wind turbine blade is provided with: a blade body; a first covering layer which covers at least a leading edge in a first region including a tip part of the blade body; and a second covering layer which covers at least the leading edge in a second region of the blade body, the second region being disposed nearer to the hub than the first covering layer, and the first covering layer has a higher erosion resistance than the second covering layer.

As described above, the first covering layer covering at least the ledge edge of the first region including the tip part of the blade body, which is susceptible to erosion due to high tip speed, is configured to have higher erosion resistance than the second covering layer covering at least the leading edge of the second region of the blade body, which is disposed on the hub side of the first covering layer. As a result, it is possible to reduce the difference in erosion rate between the first region and the second region.

Further, the first covering layer having relatively high anti-erosion properties is selectively provided on at least the leading edge of the first region. As a result, it is possible to reduce the usage of the first covering layer which is generally more expensive than the second covering layer, thereby reducing production cost of the wind turbine blade.

### [Advantageous Effects]

According to at least one embodiment of the present invention, it is possible to reduce the maintenance frequency and production cost of the blade.

### BRIEF DESCRIPTION OF DRAWINGS

[FIG.1] FIG.1 is a schematic view of an overall configuration of a wind turbine generator according to an embodiment.
[FIG.2] FIG.2 is an oblique view of a wind turbine blade according to an embodiment.
[FIG.3A] FIG.3A is a cross-sectional view taken along line A-A' of FIG.2.
[FIG.3B] FIG.3B is a cross-sectional view taken along line B-B' of FIG.2.
[FIG.4] FIG.4 is an illustration of a relationship between the operation time of the wind turbine generator and weight loss of a blade body caused by liquid-droplet erosion.
[FIG.5A] FIG.5A is a cross-sectional view of composition of a first covering layer covering a first region of the blade body according to one embodiment.
[FIG.5B] FIG.5B is a cross-sectional view of composition of a second covering layer covering a second region of the blade body according to one embodiment.
[FIG.6A] FIG.6A is a cross-sectional view of composition of a first covering layer covering a first region of the blade body according to one embodiment.
[FIG.6B] FIG.6B is a cross-sectional view of composition of a second covering layer covering a second region of the blade body according to one embodiment.
[FIG.7] FIG.7 is a schematic representation of a test method for evaluating erosion resistance of the covering layer.
[FIG.8] FIG.8 is a schematic representation of a state of a liquid droplet impinging on a test blade.
[FIG.9] FIG.9 is an illustration of a relationship between a tip speed of the blade and an incubation time of erosion.

### DETAILED DESCRIPTION

Embodiments of the present invention will now be described in detail with reference to the accompanying drawings. It is intended, however, that unless particularly specified in these embodiments, dimensions, materials, shape, its relative positions and the like shall be interpreted as illustrative only and not limitative of the scope of the present invention.

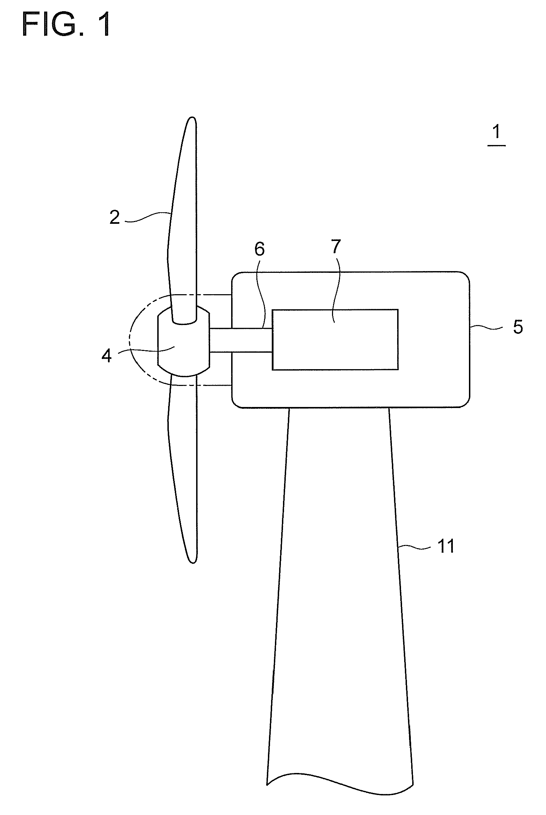

FIG.1 is a schematic view of an overall configuration of a wind turbine generator according to an embodiment. As illustrated in the drawing, a wind turbine generator according to one embodiment includes at least one wind turbine blade 2, a hub 4 to which at least one wind turbine blade 2 is attached, and a rotation shaft 6 configured to rotate the hub 4. Further, the wind turbine generator 1 includes a driven unit 7 configured to be driven by the rotation shaft 6, a nacelle 5 for housing the driven unit 7, and a tower 11 for supporting the nacelle 5.

In one embodiment, the driven unit 7 is a synchronous generator directly connected to the rotation shaft 6. In another embodiment, the driven unit 7, the driven unit 7 constitutes in part a drive train for transmitting rotational energy of the rotation shaft 6 to a generator (a synchronous generator or an induction generator) provided separately from the driven unit 7. In the case where the drive train is a hydraulic transmission formed by a hydraulic pump and a hydraulic motor, the driven unit 7 is a hydraulic pump. In the case where the drive train includes a step-up gear, the driven unit 7 is a step-up gear.

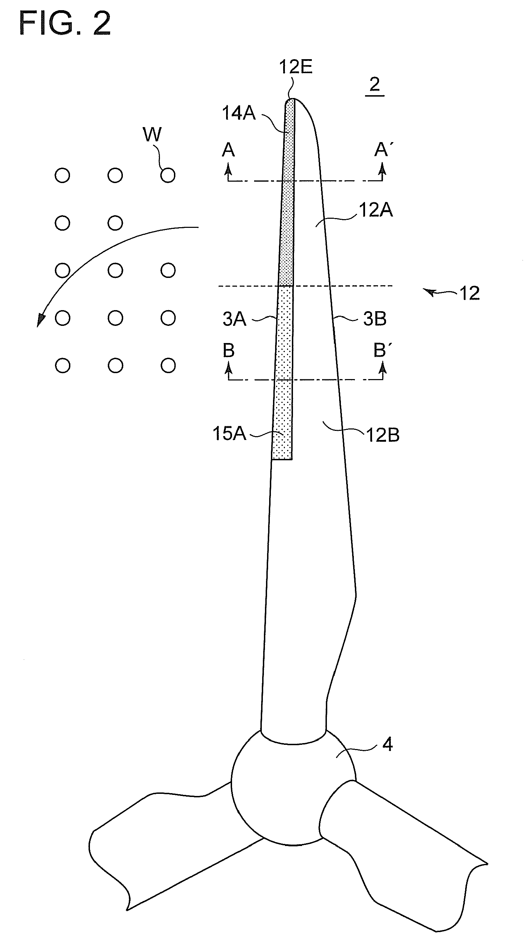

FIG.2 is an oblique view of the wind turbine blade 2 according to an embodiment. As illustrated in the drawing, in one embodiment, the wind turbine blade 2 includes a blade body 12, a first covering layer 14A and a second covering layer 15A. The first covering layer 14A is provided in a first region 12A including a tip part 12E of the blade body 12 to selectively cover a leading edge 3A side of the first region 12A. The second covering layer 15A is provided in a second region 12B of the blade body 12 disposed nearer to the hub side than the first covering layer 14A to selectively cover the leading edge 3A side of the second region 12B.

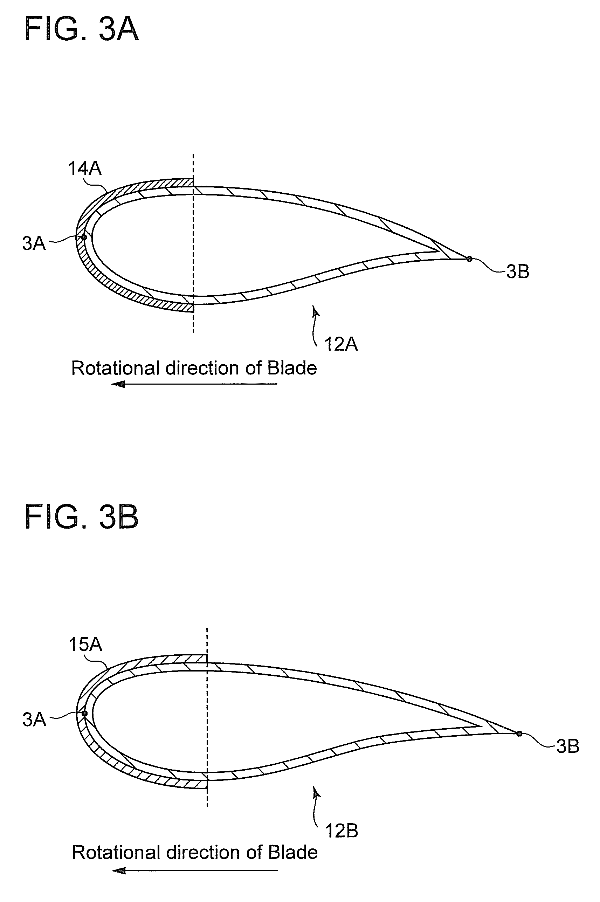

FIG.3A is a cross-sectional view taken along line A-A' of FIG.2. FIG.3B is a cross-sectional view taken along line B-B' of FIG.2. As illustrated in FIG.3A, the leading edge 3A side of the first region 12A of the blade body 12 is selectively covered by the first covering layer 14A. As illustrated in FIG.3B, the leading edge 3A side of the second region 12B of the blade body 12 is selectively covered by the second covering layer 15A.

As illustrated in FIG.2, during operation of the wind turbine generator 1, the wind turbine blade 2 is rotated around the hub 4 in such a state that the leading edge 3A is disposed on an upstream side in the rotating direction of the blade 2 (the direction of an arrow in the drawing) and the trailing edge 3B is disposed on a downstream side in the rotating direction of the blade 2. The tip speed of the blade is significantly high compared to a drop velocity of liquid droplets W. Thus, the tip speed vector of the wind turbine blade 2 is dominant to the impact speed vector of the liquid droplet W relative to the wind turbine blade 2. Therefore, when the wind turbine blade 2 collides with the liquid droplets W, basically the leading edge 3A side of the wind turbine blade 2 collides against the liquid droplets W.

By covering at least the leading edge 3A of the blade body 12 with the covering layers 14A, 15A, it is possible to reduce erosion of the blade body 12 caused by the collision against the liquid droplets W.

The first covering layer 14A provided in the first region 12A has anti-erosion properties higher than those of the second covering layer 15A provided in the second region 12B.

Herein, "anti-erosion properties" is represented by the length of the incubation time Tic which is the time it takes the damage caused by the liquid-droplet erosion to become evident on a surface of the blade body 12. More specifically, the first covering layer 14A has longer erosion incubation time Tic compared to the second covering layer 15A.

In the embodiments illustrated in FIG.2 and FIG.3, the first covering layer 14A and the second covering layer 15A selectively cover the ledge edge 3A side of the first region 12A and the second region 12B, respectively. In another embodiment, at least one of the first covering layer 14A or the second covering layer 15A is provided from the leading edge 3A over to the trailing edge 3B.

For instance, the first covering layer 14A covers from the leading edge 3A to the trailing edge 3B in the first region 12A of the blade body 12 while the second covering layer 15A covers from the leading edge 3A to the trailing edge 3B in the second region 12B of the blade body 12.

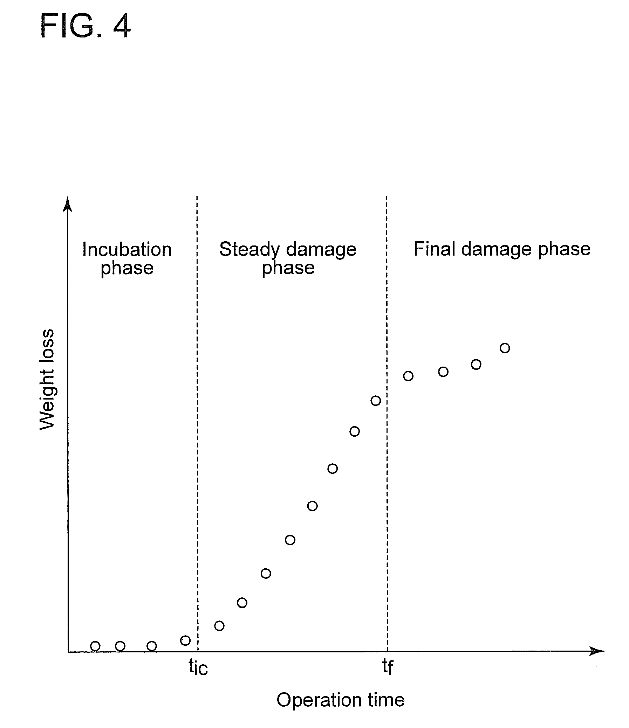

FIG.4 is an illustration of a relationship between the operation time of the wind turbine generator 1 and weight loss of the blade body 12 caused by liquid-droplet erosion. As illustrated in the drawing, the weight loss of the blade body 12 changes, starting from an incubation phase, through a steady damage phase and to a final damage phase. The incubation phase is a phase when damage on the surface of the blade body 12 caused by the liquid-droplet erosion is not evident yet (the weight of the blade body 12 has not decreased). The steady damage phase is a phase when a rate of damage caused by the liquid-droplet erosion (a rate of weight reduction of the blade body 12) becomes constant and pitting damage appears to the surface of the blade body 12. The final damage phase is a phase when the damage caused by the liquid-droplet erosion is severe and usefulness of the blade body 12 does not exist. The erosion incubation time Tic is a transition time from the incubation phase to the steady damage phase (the time that takes the incubation phase to end).

As described, the erosion of the blade in the incubation phase does not accompany change in appearance and thus, even if a part of the wind turbine blade 2 where erosion is evident is repaired by maintenance, there is possibility that erosion is progressing in other parts of the wind turbine blade 2 in the incubation phase.

Therefore, in the case where an area in the longitudinal direction of the blade 2 where erosion might become evident is large and the speed of erosion progression (erosion speed) tends to vary in the area, the maintenance frequency of the wind turbine blade 2 becomes high.

In view of this, the leading edge 3A side of the first region 12A including the tip part 12E of the blade body 12, which is susceptible to erosion due to high tip speed, is covered by the first covering layer 14A having higher anti-erosion level than the second covering layer 15A which covers the leading edge 3A side of the second region 12B of the blade body 12 disposed on the hub side of the first covering layer 14A. As a result, it is possible to reduce the difference in the erosion rate between the first region 12A and the second region 12B, hence reducing the maintenance frequency of the blade.

Further, by selectively providing the first covering layer 14A having relatively high anti-erosion level on at least the ledge edge 3A of the first region 12A, it is possible to reduce the usage of the first covering layer 14A which is generally more expensive than the second covering layer 15A, thereby reducing production cost of the blade.

In one embodiment, the first covering layer 14A is formed by a first coating applied onto a surface of the first region 12A of the blade body 12. The second covering layer 15A is formed by a second coating applied onto a surface of the second region 12B of the blade body 12. The first coating (the first covering layer 14A) has higher resistance to erosion than the second coating (the second covering layer 15A).

In one embodiment, at least one of the first covering layer 14A covering the surface of the first region 12A or the second covering layer 12B covering the surface of the second region 12B includes coating whose main component is resin. In some embodiments, this resin is polyurethane resin, vinylester resin or fluorine-based resin. The coating whose main component is polyurethane resin, vinylester resin or fluorine-based resin has high erosion resistance. By forming the coating layer to include the coating whose main component is the resin, the erosion resistance of the blade where the covering layer is formed is improved.

In one embodiment, at least one of the first covering layer 14A or the second coating layer 15A includes resin and particles of metal or ceramic embedded in the resin.

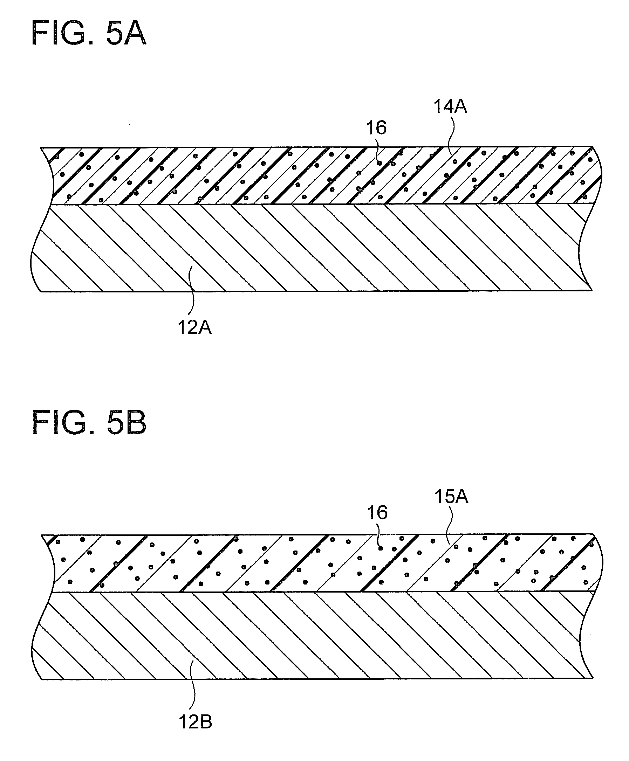

FIG.5A is a cross-sectional view of composition of the first covering layer 14A covering the first region 14A of the blade body 12 according to one embodiment. FIG.5B is a cross-sectional view of composition of the second covering layer 15A covering the second region 12B of the blade body 12 according to one embodiment.

As illustrated in these two drawings, in one embodiment, the first covering layer 14A covering the surface of the first region 12A of the blade body (the coating whose main component is resin) includes metal particles 16 embedded in resin. In one embodiment, the second covering layer 15A covering the surface of the second region 12B of the blade body 12 (the coating whose main component is resin) includes metal particles 16 embedded in resin. As a result, the erosion resistance of the coating is improved. In some embodiments, the metal particles 16 are constituted of one or more metals selected from a group including copper, stainless steel, titanium alloy and nickel alloy.

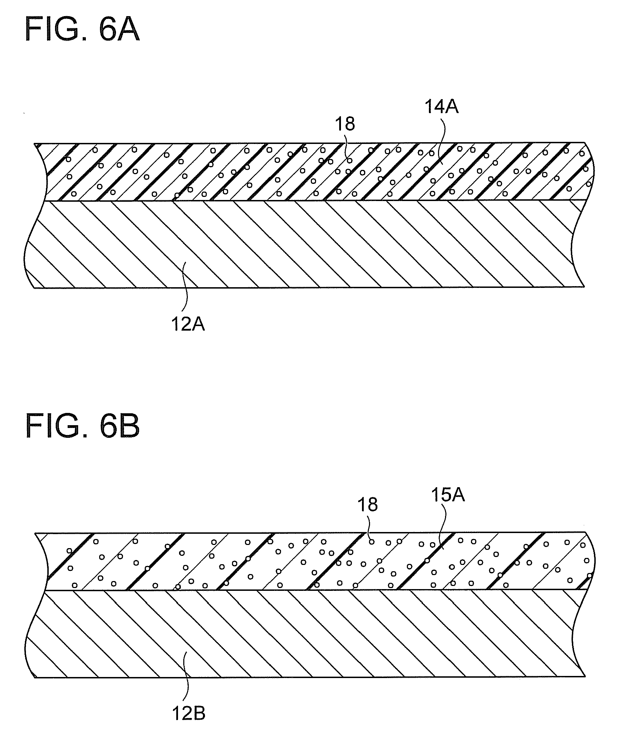

FIG.6A is a cross-sectional view of composition of the first covering layer 14A covering the first region 12A of the blade body 12 according to one embodiment. FIG.6B is a cross-sectional view of composition of the second covering layer 15A covering the second region 12B of the blade body 12 according to one embodiment.

As illustrated in these two drawings, in one embodiment, the first covering layer 14A covering the surface of the first region 12A of the blade body (the coating whose main component is resin) includes ceramic particles 18 embedded in resin. In one embodiment, the second covering layer 15A covering the surface of the second region 12B of the blade body 12 (the coating whose main component is resin) includes ceramic particles 18 embedded in resin. As a result, the erosion resistance of the coating is improved.

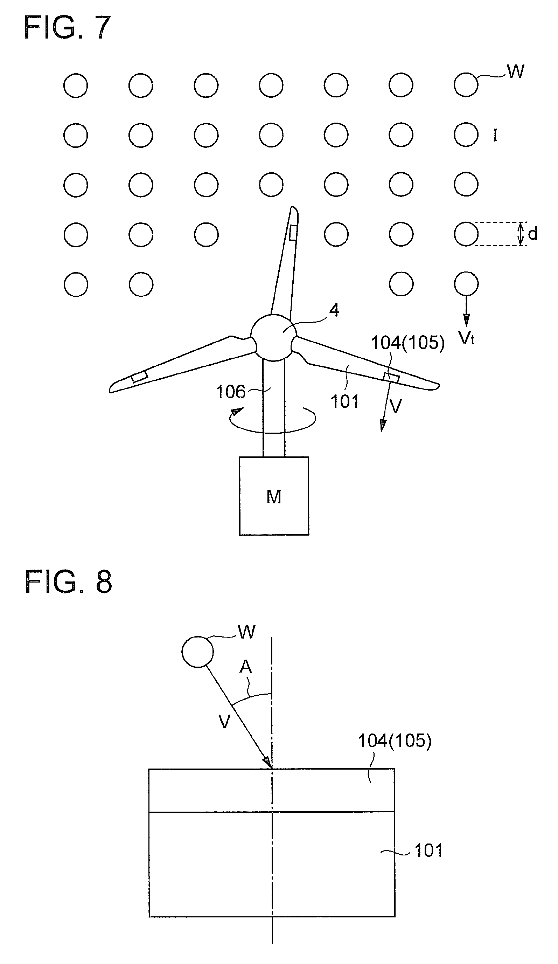

Next, a method for evaluating the erosion resistance of each of the covering layers 14A, 15A is described in reference to FIG.7 to FIG.9. FIG.7 is a schematic representation of a test method for evaluating erosion resistance (the erosion incubation time Tic) of the covering layer. As illustrated in the drawing, a covering layer 104 formed of the same material as the material forming the first covering layer 14A is provided on a surface of a test blade 101 for testing (Sample 1).

Next, the test blade 101 with the covering layer 104 formed thereon is attached to the hub 4 and the hub 4 is rotated via a rotation shaft 106 by a motor M. By rotating the hub 4, the test blade 101 attached to the hub 4 is also rotated. Rotation of the hub causes a region of the test blade 104 where the covering layer 104 is formed to be rotated around the hub 4 at the tip speed V.

Next, a large amount of liquid droplets (raindrops) is dropped from above the test blade 101. The drawing shows precipitation intensity I of the liquid drops W, terminal velocity Vt of the liquid droplets W and a particle diameter d of the liquid drops W.

FIG.8 is a schematic representation of a state of the liquid droplets W hitting the test blades 101. As illustrated in the drawing, the falling liquid droplets W hit the covering layer 104 at the tip speed V in a direction of forming a droplet impact angle A with respect to the vertical direction of the covering layer 104 provided on the surface of the test blade 101.

The Precipitation intensity I, terminal velocity Vt, blade tip speed V, droplet impact angle A and particle diameter d are set constant to study change in the weight of the text blade 101. Based on the change in weight of the text blade 101 with the covering layer 104 formed thereon, the erosion incubation time t_{ic} of the covering layer 104 is obtained (see FIG.4).

Next, a covering layer 105 formed of the same material as the material forming the second covering layer 15A is provided on the surface of the test blade 101 (Sample 2). Under the same conditions as Sample 1 (the same precipitation intensity I, terminal velocity Vt, blade tip speed V, droplet impact angle A and particle diameter d as those used for Sample 1), the same test as Sample 1 is performed to obtain erosion incubation time tic of the covering layer 105 based on the change in weight of the test blade 101 provided with the covering layer 105 thereon.

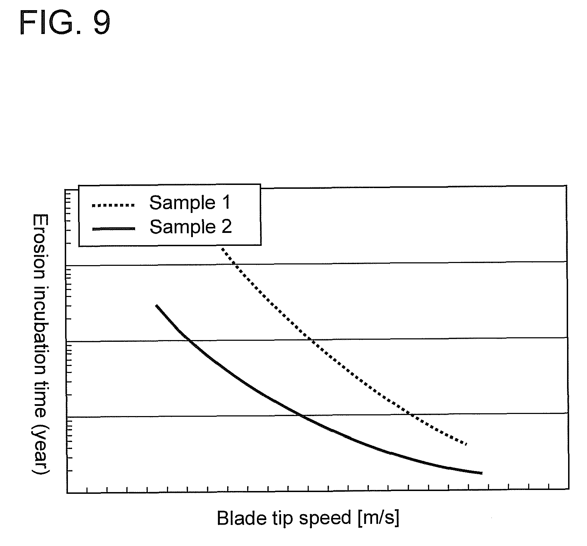

FIG.9 is an illustration of a relationship between the tip speed of the blade and the erosion incubation time. The horizontal axis represents the blade tip speed (m/s) while the vertical axis represents the erosion incubation time (year). As illustrated in the drawing, Sample 1 (the test blade 101 provided with the covering layer 105 formed of the same material as the material of the first covering layer 14A) shows longer erosion incubation time than Sample 2 (the test blade 101 provided with the covering layer 105 formed of the same material as the material of the second covering layer 15A). In other words, Sample 1 (the same material as the first covering layer 14A) has higher erosion resistance than Sample 2.

As described above, according to the wind turbine blade 2 of at least one embodiment of the present invention, the first covering layer 14A covering at least the ledge edge 3A of the first region 12A including the tip part 12E of the blade body 12, which is susceptible to erosion due to high tip speed, is configured to have higher erosion resistance than the second covering layer 15A covering at least the leading edge of the second region 12B of the blade body, which is disposed on a side nearer to the hub than the first covering layer 14A. As a result, it is possible to reduce the difference in erosion rate between the first region 12A and the second region 12B.

Further, the first covering layer 14A having relatively high anti-erosion properties is selectively provided on at least the leading edge 3A of the first region 12A. As a result, it is possible to reduce the usage of the first covering layer 14A which is generally more expensive than the second covering layer 15A, thereby reducing production cost of the wind turbine blade 2.

While the embodiments of the present invention have been described, it is obvious to those skilled in the art that various changes and modification may be made without departing from the scope of the invention.

- 1: Wind turbine generator
- 2: Wind turbine blade
- 3A: Leading edge
- 3B: Trailing edge
- 4: Hub
- 5: Nacelle
- 6, 106: Rotation shaft
- 7: Driven unit
- 11: Tower
- 12: Blade body
- 12E: Tip part
- 12A: First region
- 12B: Second region
- 14A: First covering layer
- 14B: First coating
- 15A: Second covering layer
- 15B: Second coating
- 16: Metal particle
- 18: Ceramic particle
- 101: Test blade
- 104, 105: Covering layer
- tᵢₜ: Erosion incubation time
- I: Precipitation intensity
- V: Blade tip speed
- Vt: Terminal velocity
- A: Droplet impact angle
- W: Liquid droplet
- D: Particle diameter
- M: Motor

## Claims

1. A wind turbine blade attached to a hub of a wind turbine generator, the wind turbine blade comprising:
a blade body;
a first covering layer which covers at least a leading edge in a first region including a tip part of the blade body; and
a second covering layer which covers at least the leading edge in a second region of the blade body, the second region being disposed on a hub side of the first covering layer,
wherein the first covering layer has a higher erosion resistance than the second covering layer.

2. The wind turbine blade according to claim 1,
wherein the first covering layer and the second covering layer are formed by a first coating and a second coating applied on a surface of the blade body, respectively, and
wherein the first coating has a higher erosion resistance than the second coating.

3. The wind turbine blade according to claim 1 or 2,
wherein at least one of the first covering layer or the second covering layer includes a coating whose main component is resin.

4. The wind turbine blade according to claim 3,
wherein the coating includes particles of metal or ceramic embedded in the resin.

5. The wind turbine blade according to claim 3 or 4,
wherein the resin is one of polyurethane resin, vinylester resin or fluorine-based resin.

6. The wind turbine blade according to claim 4,
wherein the metal particles are constituted of one or more metals selected from a group including copper, stainless steel, titanium alloy and nickel alloy.

7. A wind turbine generator comprising at least one wind turbine blade,
wherein the at least one blade comprises:
a blade body;
a first covering layer which covers at least a leading edge in a first region including a tip part of the blade body; and
a second covering layer which covers at least the leading edge in a second region of the blade body, the second region being disposed nearer to the hub than the first covering layer, and
wherein the first covering layer has a higher erosion resistance than the second covering layer.
